# EUROPÄISCHE PATENTSCHRIFT

(11) **EP 1 718 174 B1**
(45) Veröffentlichungstag und Bekanntmachung des Hinweises auf die Patenterteilung: **22.09.2010**
(21) Anmeldenummer: 05707498.1
(22) Anmeldetag: 18.02.2005
(51) Int. Cl.: A24C 5/47, G01B 17/00

(54) **LEIMMENGENERMITTLUNG**
GLUE QUANTITY DETERMINATION
DETERMINATION D'UNE QUANTITE DE COLLE

(30) Priorität: 27.02.2004 DE 102004010120
(43) Veröffentlichungstag der Anmeldung: 08.11.2006
(73) Patentinhaber: Hauni Maschinenbau Aktiengesellschaft, 21033 Hamburg (DE)
(72) Erfinder: Voß, Helmut, 24537 Neumünster (DE)
(74) Vertreter: Grebner, Christian Georg Rudolf
(86) Internationale Anmeldenummer: PCT/EP2005/001686
(87) Internationale Veröffentlichungsnummer: WO 2005/082179

(56) Entgegenhaltungen:
- EP-A2- 0 757 232
- WO-A1-03/032760
- DE-A1- 19 908 932
- US-A1- 2004 129 281
- US-B1- 6 308 570

## Beschreibung

Die Erfindung betrifft ein Verfahren und eine Vorrichtung zur Ermittlung einer auf einem Umhüllungsstreifen der Tabak verarbeitenden Industrie aufgetragenen Leimmenge bzw. -masse. Darüber hinaus betrifft die Erfindung eine Maschine der Tabak verarbeitenden Industrie sowie die Verwendung eines Messsystems zur Ermittlung einer auf einem Umhüllungsstreifen der Tabak verarbeitenden Industrie aufgetragenen Leimmenge bzw. -masse.

Zur Verbindung von Zigarettenfiltern mit Tabakstöcken ist in der Regel ein Belagpapierblättchen vorgesehen, das einerseits den Filter umhüllt und andererseits mit einer überstehenden Kante ein Kopfende des Tabakstocks mit dem Filter verbindet. Das Zusammenfügen des Filters mit dem Tabakstock erfolgt in der Regel durch Verleimen.

In WO-A-03/032760 sind ein Verfahren und eine Vorrichtung zur Überwachung von Leimbildern mittels einer CCD-Kamera beschrieben, wobei nach der Beleimung eines Belagpapierstreifens die beleimte Seite des Belagpapierstreifens beleuchtet wird und unter einem Glanzwinkel der beleimte Belagpapierstreifen bzw. die Leimspuren mittels der Kamera erfasst werden.

Aus der europäischen Patentanmeldung EP-A-1 147 716 ist eine Einrichtung zum Auftragen von Leim auf ein Hüllmaterial bzw. einen Umhüllungspapierstreifen eines stabförmigen Artikels der Tabak verarbeitenden Industrie beschrieben. Um ein Leimbild mit leimfreien Bereichen auf einem Umhüllungsstreifen zu erzeugen, verfügt die Einrichtung über Mittel zum Unterbrechen der Leimzufuhr auf den Umhüllungspapierstreifen.

Bei hohen Produktionsgeschwindigkeiten an einer Filteransetzmaschine kann es vorkommen, dass die Beleimungsschicht auf den Belagpapierstreifen zu dünn aufgetragen wird oder sich Lücken oder Unterbrechungen auf Grund von prozessbedingten Störungen wie z.B. Verschmutzungen im Beleimsystem bilden, so dass keine ausreichende Verbindung zwischen dem Filter und dem Tabakstock gewährleistet ist.

Außerdem kann gelegentlich werden, so dass fehlerhafte Zigaretten an der Filteransetzmaschine hergestellt werden, die im weiteren Produktionsprozess nicht mehr ohne Weiteres auffindbar sind.

Aus EP-B-0 418 342 ist eine Einrichtung zur Erfassung ausreichender Feuchte der Beleimung eines Papierstreifens beschrieben, wobei das Vorhandensein einer Beleimung auf den zu verklebenden Papierstreifen mittels eines kapazitiven Sensors erfasst wird.

Ausgehend von diesem Stand der Technik liegt der Erfindung die Aufgabe zugrunde, die Ermittlung der Leimmenge bzw. -masse sowie die Überwachung einer Beleimung auf einem Umhüllungsstreifen der Tabak verarbeitenden Industrie zu verbessern.

Gelöst wird diese Aufgabe durch ein Verfahren zur Ermittlung einer auf einem Umhüllungsstreifen der Tabak verarbeitenden Industrie aufgetragenen Leimmenge bzw. -masse, das dadurch weitergebildet wird, dass der Umhüllungsstreifen zwischen einer Ultraschall erzeugenden Quelle und einer Ultraschallsensorempfangseinheit geführt wird, wobei der Umhüllungsstreifen von der Ultraschall erzeugenden Quelle mit Ultraschall beaufschlagt wird, die den Umhüllungsstreifen durchdringenden Schallwellen als Ultraschallsignale von der Ultraschallsensorempfangseinheit empfangen werden und dass anhand der empfangenen Ultraschallsignale die Leimmenge bzw. -masse ermittelt wird. Ein Teil der ausgesendeten Ultraschallwellen wird vom beleimten Papier absorbiert und der nichtabsorbierte Teil steht als Messsignal am Empfangssensor zur Verfügung.

Im Gegensatz zum Stand der Technik, bei dem mittels eines kapazitiven Sensors die Feuchte einer Beleimung auf einem Umhüllungsstreifen erfasst wird, wird gemäß der Erfindung mittels Ultraschall bzw. die Leimmenge des aufgetragenen Leims quasi kontinuierlich geprüft und überwacht. Hierbei kann ein mit hoher Transportgeschwindigkeit geförderter und beleimter Papierstreifen auf Fehlstellen in der Beleimung untersucht werden. Das Messverfahren ist bezogen auf die aufgetragene Leimmenge ein direktes Messverfahren und unabhängig von der Zusammensetzung, z.B. dem Wasseranteil des Leims. Außerdem haben vertikale oder horizontale Papierschwankungen kaum nachteiligen Einfluss auf die empfangenen Ultraschall-Messsignale.

Das aus dem Stand der Technik bekannte kapazitive Messverfahren ist ein indirektes Verfahren, mittels dem der Feuchtegehalt, d.h. der Wasseranteil, des Leims erfasst wird.

Zur Durchführung des Verfahrens ist vorgesehen, dass der Ultraschall von wenigstens einer Sendeeinheit, insbesondere wenigstens einem Piezoelement, erzeugt wird.

Darüber hinaus wird der Ultraschall von wenigstens einer Empfangseinheit, insbesondere wenigstens ein piezosensitives Mikrophon, empfangen.

Um den geförderten Umhüllungsstreifen fortlaufend zu überwachen, wird der Umhüllungsstreifen quer zur Transportrichtung mit Ultraschall beaufschlagt.

Ferner ist es bevorzugt, wenn der Umhüllungsstreifen zwischen der Sendeeinheit und der Sensorempfangseinheit hindurchgeführt wird. Dadurch kann der Ultraschall mit einer bevorzugten Ausrichtung auf den Umhüllungsstreifen ausgerichtet werden und den Umhüllungsstreifen durchschallen. Hierbei sind auf der beleimten oder unbeleimten Seite des Umhüllungsstreifens Ultraschall sendende Piezoelemente angeordnet. Auf der anderen Seite werden die Ultraschallwellen bzw. -signale von piezosensitiven Mikrophonen bzw. Sensoren empfangen.

In einer bevorzugten Ausführungsform der Erfindung ist vorgesehen, dass der Umhüllungsstreifen über seine gesamte Breite überwacht wird. Dadurch lassen sich alle Breiten des Umhüllungsstreifens formatfrei mit demselben Messsystem, bestehend aus einer Sendeeinheit und einer Sensorempfangseinheit, erfassen. Wenn außerdem der Umhüllungsstreifen vor dem Auftrag des Leims mit Ultraschall beaufschlagt wird, ist es möglich, Schwankungen durch die Dicke bzw. die Eigenschaften des Umhüllungsstreifens bei der Auswertung der Signale zu eliminieren.

Dazu ist vorgesehen, dass die Ultraschallsignale vor dem Aufbringen des Leimbildes und die Ultraschallsignale nach dem Aufbringen des Leimbildes miteinander, insbesondere voneinander subtrahiert, verglichen werden. Hierfür werden bevorzugterweise die Ultraschallsignale mittels einer Auswerteeinrichtung ausgewertet.

Um Tendenzen des Beleimungsgrades bzw. von bestimmten Bereichen der Leimspuren des Leimbildes besser erkennen zu können, werden die Ultraschallsignale zeitlich gemittelt.

Darüber hinaus ist es von Vorteil, wenn anhand der empfangenen Ultraschallsignale die Leimmenge von Leimspuren eines Leimbildes, vorzugsweise im zeitlichen Mittel, erfasst und/oder fehlerhafte Bereiche des Leimbildes erkannt werden.

Weiterhin werden insbesondere anhand der empfangenen Ultraschallsignale die Lage des Umhüllungsstreifens und/oder die Schnittposition erkannt.

Außerdem ist vorgesehen, dass zur Überwachung eines auf einem Umhüllungsstreifen der Tabak verarbeitenden Industrie aufgetragenen Leimbildes das Leimbild mit Ultraschall beaufschlagt wird, vom Leimbild kommende Ultraschallsignale empfangen werden und dass anhand der empfangenen Ultraschallsignale das Leimbild überwacht wird. Vorteilhafte Ausgestaltungen dieses Überwachungsverfahren für das aufgebrachte Leimbild ergeben sich entsprechend dem voranstehend beschriebenen erfindungsgemäßen Verfahren.

Die Aufgabe wird ferner gelöst durch eine Vorrichtung zur Ermittlung einer auf einem Umhüllungsstreifen der Tabak verarbeitenden Industrie aufgetragenen Leimmenge bzw. -masse, die dadurch weitergebildet wird, dass ein Ultraschallmesssystem mit wenigstens einer Ultraschall erzeugenden Quelle zur Beaufschlagung des Umhüllungsstreifens mit Ultraschall und mit wenigstens einer Ultraschallsensorempfangseinheit zum Empfang von Ultraschallsignalen vom Umhüllungsstreifen vorgesehen ist, wobei der Umhüllungsstreifen zwischen der Ultraschall erzeugenden Quelle und der Ultraschallempfangseinheit geführt ist.

Gemäß einer vorteilhaften Ausführungsform ist die Sensoreinheit U-förmig bzw. gabelartig ausgebildet.

Dabei sind auf einem Schenkel der U-Form wenigstens eine Ultraschallquelle, insbesondere wenigstens ein Piezoelement und auf dem anderen Schenkel der U-Form wenigstens eine Ultraschallsensorempfangseinheit, insbesondere wenigstens ein piezosensitives Mikrophon, angeordnet. Bevorzugt ist eine größere Anzahl von Ultraschall aussendenden Piezoelementen, die in einem Array angeordnet sind, um ein homogenes Schallfeld über die gesamte Breite des Umhüllungsstreifens zu erhalten. Ein Array ist auch auf der Sensorempfangsseite vorteilhaft, so dass bessere Ortsauflösungen erzielbar sind.

Um eine Kompensation der Papierdicke zu erreichen, ist eine zweite, vorzugsweise U-förmige, Sensoreinrichtung mit einer Ultraschall erzeugenden Quelle und einer Ultraschallempfangseinheit vor einem Leimauftragungsorgan für den Umhüllungsstreifen, bezogen auf die Transportrichtung des Umhüllungsstreifens, vorgesehen.

Ferner ist es von Vorteil, wenn eine Auswerteeinrichtung zur Auswertung der empfangenen Ultraschallsignale vorgesehen ist.

Die Vorrichtung zeichnet sich gemäß einer Weiterbildung ferner dadurch aus, dass mittels des Ultraschallmesssystems die gesamte Breite des Umhüllungsstreifens überwachbar ist.

Des Weiteren ist zur Überwachung eines auf einem Umhüllungsstreifen der Tabak verarbeitenden Industrie aufgetragenen Leimbildes eine Sensoreinrichtung mit wenigstens einer Ultraschall erzeugenden Quelle zur Beaufschlagung des Leimbildes mit Ultraschall und mit wenigstens einer Ultraschallempfangseinheit zum Empfang von Ultraschallsignalen vom Leimbild vorgesehen. Vorteilhafte Weiterbildungen ergeben sich entsprechend zu den Ausführungen zur Ermittlungsvorrichtung.

Außerdem wird die Aufgabe gelöst durch eine Maschine der Tabak verarbeitenden Industrie, die mit einer voranstehend beschriebenen erfindungsgemäßen Vorrichtung, insbesondere zur Ermittlung einer auf einem Umhüllungsstreifen der Tabak verarbeitenden Industrie aufgetragenen Leimmenge bzw. -masse, ausgestattet ist. Zur Vermeidung von Wiederholungen wird auf die obigen Ausführungen zur erfindungsgemäßen Vorrichtung ausdrücklich verwiesen.

Eine weitere Lösung der Aufgabe besteht in der Verwendung eines Messsystems zur Ermittlung einer auf einem Umhüllungsstreifen der Tabak verarbeitenden Industrie aufgetragenen Leimmenge bzw. -masse, wobei das Messsystem als Ultraschallmesssystem ausgebildet ist, wobei das Ultraschallmesssystem mit wenigstens einer Ultraschall erzeugenden Quelle zur Beaufschlagung des Umhüllungsstreifens mit Ultraschall und mit wenigstens einer Ultraschallsensorempfangseinheit zum Empfang von Ultraschallsignalen vom Umhüllungsstreifen vorgesehen ist, wobei der Umhüllungsstreifen zwischen der Ultraschall erzeugenden Quelle und der Ultraschallsensorempfangseinheit geführt ist.

Zur Kompensation der Papiereigenschaften bzw. der Papierdicke ist ferner ein Referenz-Ultraschallmesssystem, vorzugsweise für den unbeleimten Umhüllungsstreifen, vorgesehen.

Von Vorteil ist es außerdem, wenn eine Auswerteeinheit zur Auswertung der empfangenen Ultraschallsignale vorgesehen ist.

Das Ultraschallmesssystem bzw. das Referenz-Ultraschallmesssystem arbeiten nach den oben dargestellten erfindungsgemäßen Verfahren, so dass zur Vermeidung von Wiederholungen auf die obigen Ausführungen verwiesen wird.

Die Erfindung wird nachstehend ohne Beschränkung des allgemeinen Erfindungsgedankens anhand eines Ausführungsbeispiels in der nachstehenden Zeichnung exemplarisch beschrieben, auf die bezüglich aller im Text nicht näher erläuterten Einzelheiten ausdrücklich verwiesen wird. Es zeigt:

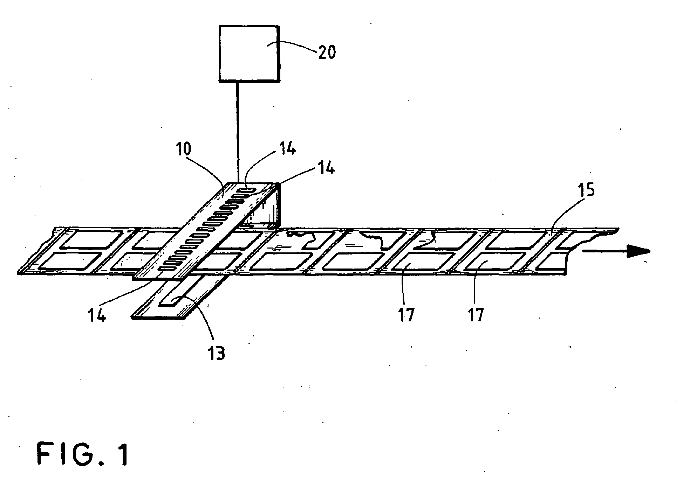

- Fig. 1: eine schematische perspektivische Darstellung eines erfindungsgemäßen Sensors.

In Fig. 1 ist ein Ultraschallmeßsystem 10 in einer perspektivischen Ansicht gezeigt. Das Ultraschallmeßsystem 10 ist in Form einer Gabel bzw. U-Form ausgebildet. Zwischen den beiden Schenkeln der U-Form wird ein Belagpapierstreifen 15 hindurchgeführt und transportiert. Der Belagpapierstreifen 15 ist mit einem Leimbild eines aufgebrachten Leims versehen, das auf den Belagpapierstreifen 15 von einem hier nicht dargestellten Beleimungsorgan aufgebracht worden ist. Das Leimbild verfügt über mehrere leimfreie Bereiche 17, die nach Schneiden des Belagpapierstreifens 15 in Belagblättchen und nach Umwicklung der geschnittenen Belagblättchen um Filterstopfen und Tabakstöcke mit Hilfe von Bearbeitungsorganen perforiert werden.

Darüber hinaus weist der Belagpapierstreifen 15 auf beiden Seiten des Streifens einen leimfreien Randbereich, typischerweise in der Größenordnung einer Breite von 0,5 mm, auf. Die Leimspuren des Leimbildes in den Randzonen im Bereich des leimfreien Randbereiches haben eine typische Breite von ungefähr 4 mm und sind mit einer 10 µm bis 50 µm dicken Leimschicht versehen. In der Mitte des Leimbildes weisen die Leimspuren im Bereich der Mittelzonen eine typische Breite von 4 mm bis 10 mm auf und eine Leimspurdicke von 10 µm bis 30 µm Dicke auf.

Die Randzonen sind maßgeblich für die Verklebungen des Belagpapiers an den Tabakstock der Zigarette verantwortlich. Fehlender Leim an diesen Stellen führt zu losen bzw. abfallenden Filtern und ist daher für das Aufbringen des Leims besonders wichtig. Daher wird stellenweise mehr Leim im Randzonenbereich als in den Mittelzonen des Leimbildes aufgetragen.

Bei Beleimungsfehlern in den Mittelzonen kann es zu Klebeproblemen im Nahtbereich der Filter kommen, die von einem nachgeschalteten pneumatischen Prüfsystem auf einer Prüftrommel indirekt aufgespürt werden können, so dass die mit einem fehlerhaften Belagpapierblättchen versehene Zigarette ausgeworfen wird. Bei den Mittelzonen gibt es sowohl durchgehende Zonen, als auch leimfreie Zonen (Bezugszeichen 17).

Je nach Leimsorte sowie Form des Leimauftragungsorgans oder anderer Prozessparameter kann es innerhalb der einzelnen Leimspuren des Leimbildes zu Überhöhungen und somit zu einer inhomogenen Verteilung des Leims über die Breite des Belagpapierstreifens 15 kommen.

Der beleimte Belagpapierstreifen 15 wird berührungslos durch das U-förmige Ultraschallmeßsystem 10 geführt. Eine hier nicht dargestellte Führungseinrichtung bzw. Führung kann zusätzlich vorgesehen sein, um ein Flattern der Papierbahn zu verhindern. Auf der unbeleimten Seite befindet sich eine Sendeleiste 13 mit linear angeordneten Piezoelementen zur Erzeugung von Ultraschallwellen. Auf der gegenüberliegenden, beleimten Seite des Belagpapierstreifens 15 befindet sich eine lineare Anordnung aus Sensoren bzw. piezosensitiven Mikrophonen 14. Die Mikrophone 14 haben beispielsweise eine Breite von ca. 2 m m bis 5 mm und einen Abstand von ungefähr 0,2 mm bis 0,6 mm.

Die Anordnung aus den Mikrophonen 14 ist auf die Ultraschallfrequenz der Sendeleiste 13 abgeglichen. Typischerweise eignen sich für die Ermittlung der Leimmenge oder Überwachung der Leimspur bzw. auch des Leimbildes auf dem Belagpierstreifen 15 Frequenzen von über 100 kHz, bevorzugterweise über 400 kHz. Hierbei ist der von den Piezoelementen der Sendeleiste 13 erzeugte Ultraschall quer zur Transportrichtung, insbesondere senkrecht, gerichtet. Der erzeugte Ultraschall durchschallt den Belagpapierstreifen 15 sowie die überstehenden Randzonen des Belagpapierstreifens 15.

Das Ultraschallmeßsystem 10 arbeitet im Impulsbetrieb, d.h. die Sendeleiste 13 sendet einen Schall impuls, so dass die Anordnung der Mikrophone 14 die Intensität des empfangenen Schalldrucks registriert.

Je nach Dichte bzw. Flächengewicht des aufgetragenen Leims auf den Belagpapierstreifen 15 ergibt sich ein unterschiedliches Mengen- bzw. Masseprofil sowie Dichteprofil über die Breite des Belagpapierstreifens 15. Aufgrund der Arnplitudenänderungen des Empfangssignals über die Breite des B eiagpapierstreifens 15, die von den Mikrophonen 14 erfasst werde n, wird die Menge bzw. Masse oder die Dichte des Leims über die Breite gemessen werden. Für die Auswertung der empfangenen Ultraschallsignale ist das Ultraschallmeßsystem 10 mit einer Auswerteeinrichtung 20 verbunden.

Die Sendeleiste 13 und die Anordnung der Mikrophone 14 sind so ausgelegt, dass sie über die gesamte Breite des Belagpapierstreifens 15 das Leimbild bzw. die Leimmenge erfassen. Insbesondere sind sie so ausgelegt, dass sie länger als die maximale Formatbreite eines Umhüllungsstreifens 15 sind. Dadurch lassen sich zahlreiche Breiten eines Belagpapierstreifens 15 formatfrei mit dem gleichen Meßsystem 10 erfassen.

Um Einflüsse des Belagpapierstreifens 15 auf die Messungen zu eliminieren, ist vor einem Leimauftragungsorgan ein zweites Ultraschallmeßsystem, das ebenfalls nach der Art des in der Zeichnung dargestellten Ultraschallmeßsystems 10 gebaut ist, angeordnet. Dieses zweite Ultraschallmeßsystem misst die Schwankungen und Einflüsse der Dicke eines noch nicht beleimten Belagpapierstreifens 15. Das zweite Ultraschallmeßsystem ist ebenfalls mit der Auswerteeinrichtung 20 verbunden, so dass über die Differenzbildung der beiden gemessenen Ultraschallsignale vor und nach der Beleimung des Belagpapierstreifens 15 eine Kompensation der Papierdickenschwankung durch eine Differenzbildung der Signale erfolgt.

Um die Menge bzw. Masse sowie Güte der Beleimung bzw. deren zeitliche Entwicklung bzw. Tendenz über einen längeren Zeitraum erkennen zu können und so Rückschlüsse über die Klebkraft des aufgetragenen Leims zu erhalten, werden die Ultraschallsignale der Sensoren zeitlich gemittelt. Leimaussetzer bzw. fehlerhafte Bereiche des Leimbildes werden durch Über- oder Unterschreitung eines Sollwertes für eine vorgegebene Leimmenge mittels des erfindungsgemäßen Ultraschallmeßsystems 10 erkannt.

### Bezugszeichenliste

- 10: Ultraschallmeßsystem
- 13: Sendeleiste
- 14: Mikrophone / Sensorempfangseinheit
- 15: Belagpapierstreifen
- 17: leimfreie Zonen
- 20: Auswerteeinheit

## Patentansprüche

1. Verfahren zur Ermittlung einer auf einem Umhüllungsstreifen (15) der Tabak verarbeitenden Industrie aufgetragenen Leimmenge bzw. -masse, **dadurch gekennzeichnet, dass** der Umhüllungsstreifen (15) zwischen einer Ultraschall erzeugenden Quelle (13) und einer Ultraschallsensorempfangseinheit (14) geführt wird, wobei der Umhüllungsstreifen (15) von der Ultraschall erzeugenden Quelle (13) mit Ultraschall beaufschlagt wird, die den Umhüllungsstreifen (15) durchdringenden Schallwellen als Ultraschallsignale von der Ultraschallsensorempfangseinheit (14) empfangen werden und dass anhand der empfangenen Ultraschallsignale die Leimmenge bzw. -masse ermittelt wird.

2. Verfahren nach Anspruch 1, **dadurch gekennzeichnet, dass** der Ultraschall von wenigstens einer Sendeeinheit (13), insbesondere wenigstens einem Piezoelement, erzeugt wird.

3. Verfahren nach Anspruch 1 oder 2, **dadurch gekennzeichnet, dass** der Ultraschall von wenigstens einer Sensorempfangseinheit (14), insbesondere wenigstens einem piezosensitiven Mikrophon (14), empfangen wird.

4. Verfahren nach einem der Ansprüche 1 bis 3, **dadurch gekennzeichnet, dass** der Umhüllungsstreifen (15) quer zur Transportrichtung mit Ultraschall beaufschlagt wird.

5. Verfahren nach einem oder mehreren der Ansprüche 1 bis 4, **dadurch gekennzeichnet, dass** der Umhüllungsstreifen (15) zwischen der Sendeeinheit (13) und der Sensorempfangseinheit (14) hindurchgeführt wird.

6. Verfahren nach einem oder mehreren der Ansprüche 1 bis 5, **dadurch gekennzeichnet, dass** der Umhüllungsstreifen (15) über die gesamte Breite überwacht wird.

7. Verfahren nach einem oder mehreren der Ansprüche 1 bis 6, **dadurch gekennzeichnet, dass** der Umhüllungsstreifen (15) vor dem Auftrag des Leims mit Ultraschall beaufschlagt wird.

8. Verfahren nach einem oder mehreren der Ansprüche 1 bis 7, **dadurch gekennzeichnet, dass** die Ultraschallsignale mittels einer Auswerteeinrichtung (20) ausgewertet werden.

9. Verfahren nach einem oder mehreren der Ansprüche 1 bis 8, **dadurch gekennzeichnet, dass** die Ultraschallsignale zeitlich gemittelt werden.

10. Verfahren nach einem oder mehreren der Ansprüche 1 bis 9, **dadurch gekennzeichnet, dass** die Ultraschallsignale nach dem Aufbringen des Leims und die Ultraschallsignale vor dem Aufbringen des Leims miteinander, insbesondere voneinander subtrahiert, verglichen werden.

11. Verfahren nach einem oder mehreren der Ansprüche 1 bis 10, **dadurch gekennzeichnet, dass** anhand der empfangenen Ultraschallsignale die Leimmenge von Leimspuren eines Leimbildes, vorzugsweise im zeitlichen Mittel, erfasst und/oder fehlerhafte Bereiche des Leimbildes erkannt werden.

12. Verfahren nach einem der Ansprüche 1 bis 11, **dadurch gekennzeichnet, dass** zur Überwachung eines auf einem Umhüllungsstreifen (15) der Tabak verarbeitenden Industrie aufgetragenen Leimbildes das Leimbild mit Ultraschall beaufschlagt wird, vom Leimbild kommende Ultraschallsignale empfangen werden und dass anhand der empfangenen Ultraschallsignale das Leimbild überwacht wird.

13. Vorrichtung zur Ermittlung einer auf einem Umhüllungsstreifen (15) der Tabak verarbeitenden Industrie aufgetragenen Leimmenge bzw. -masse, **dadurch gekennzeichnet, dass** ein Ultraschallmesssystem (10) mit wenigstens einer Ultraschall erzeugenden Quelle (13) zur Beaufschlagung des Umhüllungsstreifens (15) mit Ultraschall und mit wenigstens einer Ultraschallsensorempfangseinheit (14) zum Empfang von Ultraschallsignalen vom Umhüllungsstreifen (15) vorgesehen ist, wobei der Umhüllungsstreifen (15) zwischen der Ultraschall erzeugenden Quelle (13) und der Ultraschallsensorempfangseinheit (14) geführt ist.

14. Vorrichtung nach Anspruch 13, **dadurch gekennzeichnet, dass** das Ultraschallmesssystem (10) U-förmig ausgebildet ist.

15. Vorrichtung nach Anspruch 13 oder 14, **dadurch gekennzeichnet, dass** auf einem Schenkel der U-Form des Ultraschallmesssystems (10) wenigstens eine Ultraschall erzeugende Quelle (13), insbesondere wenigstens ein Piezoelement, und auf dem anderen Schenkel der U-Form wenigstens eine Ultraschallsensorempfangseinheit (14), insbesondere wenigstens ein piezosensitives Mikrophon (14), angeordnet sind.

16. Vorrichtung nach einem oder mehreren der Ansprüche 13 bis 15, **dadurch gekennzeichnet, dass** ein zweites, vorzugsweise U-förmiges, Messsystem mit einer Ultraschall erzeugenden Quelle und mit einer Ultraschallsensorempfangseinheit vor einem Leimauftragsorgan für den Umhüllungsstreifen, bezogen auf die Transportrichtung des Umhüllungsstreifens, vorgesehen ist.

17. Vorrichtung nach einem oder mehreren der Ansprüche 13 bis 16, **dadurch gekennzeichnet, dass** eine Auswerteeinrichtung (20) zur Auswertung der empfangenen Ultraschallsignale vorgesehen ist.

18. Vorrichtung nach einem oder mehreren der Ansprüche 13 bis 17, **dadurch gekennzeichnet, dass** mittels des Ultraschallmesssystems (10) die gesamte Breite des Umhüllungsstreifens (15) überwachbar ist.

19. Vorrichtung nach einem der Ansprüche 13 bis 18, **dadurch gekennzeichnet, dass** zur Überwachung eines auf einem Umhüllungsstreifen (15) der Tabak verarbeitenden Industrie aufgetragenen Leimbildes eine Sensoreinrichtung (10) mit wenigstens einer Ultraschall erzeugenden Quelle (13) zur Beaufschlagung des Leimbildes mit Ultraschall und mit wenigstens einer Ultraschallempfangseinheit (14) zum Empfang von Ultraschallsignalen vom Leimbild vorgesehen ist.

20. Maschine der Tabak verarbeitenden Industrie mit einer Vorrichtung zur Ermittlung einer auf einem Umhüllungsstreifen (15) der Tabak verarbeitenden Industrie aufgetragenen Leimmenge bzw. -masse nach einem oder mehreren der Ansprüche 13 bis 19.

21. Verwendung eines Messsystems (10) zur Ermittlung einer auf einem Umhüllungsstreifen (15) der Tabak verarbeitenden Industrie aufgetragenen Leimmenge bzw. -masse, **dadurch gekennzeichnet, dass** das Messsystem (10) als Ultraschallmesssystem (10) ausgebildet ist, wobei das Ultraschallmesssystem (10) mit wenigstens einer Ultraschall erzeugenden Quelle (13) zur Beaufschlagung des Umhüllungsstreifens (15) mit Ultraschall und mit wenigstens einer Ultraschallsensorempfangseinheit (14) zum Empfang von Ultraschallsignalen vom Umhüllungsstreifen (15) vorgesehen ist, wobei der Umhüllungsstreifen (15) zwischen der Ultraschall erzeugenden Quelle (13) und der Ultraschallsensorempfangseinheit (14) geführt ist.

22. Verwendung nach Anspruch 21, **dadurch gekennzeichnet, dass** ein Referenz-Ultraschallmesssystem, vorzugsweise für den unbeleimten Umhüllungsstreifen, vorgesehen ist.

23. Verwendung nach Anspruch 21 oder 22, **dadurch gekennzeichnet, dass** eine Auswerteeinheit (20) zur Auswertung der empfangenen Ultraschallsignale vorgesehen ist.

## Claims

1. Method for determining an amount or mass of glue applied to a wrapping strip (15) of the tobacco processing industry, **characterised in that** the wrapping strip (15) is guided between an ultrasound generating source (13) and an ultrasound sensor reception unit (14), the ultrasound generating source (13) exposing the wrapping strip (15) to ultrasound, the sound waves penetrating the wrapping strip (15) being received by the ultrasound sensor reception unit (14) as ultrasonic signals, and **in that** the amount or mass of glue is determined based on the received ultrasonic signals.

2. Method according to claim 1, **characterised in that** the ultrasound is generated by at least one transmission unit (13), in particular at least one piezo element.

3. Method according to claim 1 or 2, **characterised in that** the ultrasound is received by at least one sensor reception unit (14), in particular at least one piezosensitive microphone (14).

4. Method according to one of claims 1 to 3, **characterised in that** the wrapping strip (15) is exposed to ultrasound transversely to the direction of transportation.

5. Method according to one or more of claims 1 to 4, **characterised in that** the wrapping strip (15) is guided through between the transmission unit (13) and the sensor reception unit (14).

6. Method according to one or more of claims 1 to 5, **characterised in that** the wrapping strip (15) is monitored over the entire width.

7. Method according to one or more of claims 1 to 6, **characterised in that** the wrapping strip (15) is exposed to ultrasound before the application of the glue.

8. Method according to one or more of claims 1 to 7, **characterised in that** the ultrasonic signals are evaluated by means of an evaluation means (20).

9. Method according to one or more of claims 1 to 8, **characterised in that** the ultrasonic signals are averaged over time.

10. Method according to one or more of claims 1 to 9, **characterised in that** the ultrasonic signals after the application of the glue and the ultrasonic signals before the application of the glue are compared to one another, in particular subtracted from one another.

11. Method according to one or more of claims 1 to 10, **characterised in that** the amount of glue of glue lines of a glue pattern is detected, preferably in the average over time, and/or defective regions of the glue pattern are recognised based on the received ultrasonic signals.

12. Method according to one of claims 1 to 11, **characterised in that**, for monitoring a glue pattern applied to a wrapping strip (15) of the tobacco processing industry, the glue pattern is exposed to ultrasound, ultrasonic signals coming from the glue pattern are received and **in that** the glue pattern is monitored based on the received ultrasonic signals.

13. Device for determining an amount or mass of glue applied to a wrapping strip (15) of the tobacco processing industry, **characterised in that** an ultrasound measuring system (10) is provided with at least one ultrasound generating source (13) for exposing the wrapping strip (15) to ultrasound and with at least one ultrasound sensor reception unit (14) for receiving ultrasonic signals from the wrapping strip (15), the wrapping strip (15) being guided between the ultrasound generating source (13) and the ultrasound sensor reception unit (14).

14. Device according to claim 13, **characterised in that** the ultrasound measuring system (10) is embodied in a U-shaped manner.

15. Device according to claim 13 or 14, **characterised in that** at least one ultrasound generating source (13), in particular at least one piezo element, is arranged on one leg of the U shape of the ultrasound measuring system (10) and at least one ultrasound sensor reception unit (14), in particular at least one piezosensitive microphone (14), is arranged on the other leg of the U shape.

16. Device according to one or more of claims 13 to 15, **characterised in that** a second, preferably U-shaped, measuring system is provided with an ultrasound generating source and with an ultrasound sensor reception unit before a glue application member for the wrapping strip, with respect to the direction of transportation of the wrapping strip.

17. Device according to one or more of claims 13 to 16, **characterised in that** an evaluation means (20) is provided for evaluating the received ultrasonic signals.

18. Device according to one or more of claims 13 to 17, **characterised in that** the entire width of the wrapping strip (15) can be monitored by means of the ultrasound measuring system (10).

19. Device according to one of claims 13 to 18, **characterised in that**, for monitoring a glue pattern applied to a wrapping strip (15) of the tobacco processing industry, a sensor means (10) is provided with at least one ultrasound generating source (13) for exposing the glue pattern to ultrasound and with at least one ultrasound reception unit (14) for receiving ultrasonic signals from the glue pattern.

20. Machine of the tobacco processing industry with a device for determining an amount or mass of glue applied to a wrapping strip (15) of the tobacco processing industry according to one or more of claims 13 to 19.

21. Use of a measuring system (10) for determining an amount or mass of glue applied to a wrapping strip (15) of the tobacco processing industry, **characterised in that** the measuring system (10) is embodied as an ultrasound measuring system (10), the ultrasound measuring system (10) being provided with at least one ultrasound generating source (13) for exposing the wrapping strip (15) to ultrasound and with at least one ultrasound sensor reception unit (14) for receiving ultrasonic signals from the wrapping strip (15), the wrapping strip (15) being guided between the ultrasound generating source (13) and the ultrasound sensor reception unit (14).

22. Use according to claim 21, **characterised in that** a reference ultrasound measuring system is provided, preferably for the unglued wrapping strip.

23. Use according to claim 21 or 22, **characterised in that** an evaluation unit (20) is provided for evaluating the received ultrasonic signals.

## Revendications

1. Procédé de détection d'une quantité et/ou d'une masse de colle appliquée sur une bande de gainage (15) de l'industrie de transformation du tabac, **caractérisé en ce que** la bande de gainage (15) est guidée entre une source de génération d'ultrasons (13) et une unité de réception d'un détecteur à ultrasons (14), la bande de gainage (15) étant ce faisant exposée aux ultrasons provenant de la source de génération d'ultrasons (13), les ondes ultrasonores qui traversent la bande de gainage (15) étant reçues par l'unité de réception du détecteur à ultrasons (14) en tant que signaux ultrasonores, et **en ce que** la quantité de colle et/ou la masse de colle est déterminée par le biais des signaux ultrasonores reçus.

2. Procédé selon la revendication 1, **caractérisé en ce que** l'ultrason est généré par au moins une unité de génération (13), en particulier par au moins un élément piézoélectrique.

3. Procédé selon la revendication 1 ou 2, **caractérisé en ce que** l'ultrason est reçu par au moins une unité de réception du détecteur (14), en particulier par au moins un microphone piézo-sensible (14).

4. Procédé selon l'une des revendications 1 à 3, **caractérisé en ce que** la bande de gainage (15) est exposée aux ultrasons transversalement à la direction de transport.

5. Procédé selon une ou plusieurs des revendications 1 à 4, **caractérisé en ce que** la bande de gainage (15) est introduite entre l'unité de génération (13) et l'unité de réception du détecteur (14).

6. Procédé selon une ou plusieurs des revendications 1 à 5, **caractérisé en ce que** la bande de gainage (15) est contrôlée sur toute sa largeur.

7. Procédé selon une ou plusieurs des revendications 1 à 6, **caractérisé en ce que** la bande de gainage (15) est exposée aux ultrasons avant l'application de la colle.

8. Procédé selon une ou plusieurs des revendications 1 à 7, **caractérisé en ce que** les signaux ultrasonores sont analysés par un dispositif d'évaluation (20).

9. Procédé selon une ou plusieurs des revendications 1 à 8, **caractérisé en ce qu'**est établie la moyenne dans le temps des signaux ultrasonores.

10. Procédé selon une ou plusieurs des revendications 1 à 9, **caractérisé en ce que** les signaux ultrasonores après l'application de la colle et les signaux ultrasonores avant l'application de la colle sont comparés les uns aux autres, en particulier soustraits les uns des autres.

11. Procédé selon une ou plusieurs des revendications 1 à 10, **caractérisé en ce que** la quantité de colle des lignes de colle d'un tracé d'encollage est détectée par le biais des signaux ultrasonores reçus, de préférence en moyenne dans le temps, et/ou que des zones déficientes du tracé d'encollage sont identifiées.

12. Procédé selon l'une des revendications 1 à 11, **caractérisé en ce que** pour contrôler un tracé d'encollage appliqué sur une bande de gainage (15) de l'industrie de transformation du tabac, le tracé d'encollage est exposé aux ultrasons, **en ce que** les signaux ultrasonores provenant du tracé d'encollage sont réceptionnés et **en ce que** le tracé d'encollage est contrôlé sur la base des signaux ultrasonores reçus.

13. Dispositif de détection d'une quantité et/ou d'une masse de colle appliquée sur une bande de gainage (15) de l'industrie de transformation du tabac, **caractérisé en ce qu'**un système de mesure à ultrasons (10) est prévu, comprenant au moins une source de génération d'ultrasons (13) destinée à transmettre des ultrasons à la bande de gainage (15), et au moins une unité de réception du détecteur à ultrasons (14) destinée à recevoir les signaux ultrasonores provenant de la bande de gainage (15), la bande de gainage (15) étant ce faisant guidée entre la source de génération d'ultrasons (13) et l'unité de réception du détecteur à ultrasons (14).

14. Dispositif selon la revendication 13, **caractérisé en ce que** le système de mesure à ultrasons (10) est conçu en U.

15. Dispositif selon la revendication 13 ou 14, **caractérisé en ce qu'**est disposée sur l'une des branches du U du système de mesure à ultrasons (10) au moins une source de génération d'ultrasons (13), en particulier au moins un élément piézoélectrique, et **en ce qu'**est disposée sur l'autre branche du U au moins une unité de réception d'un détecteur à ultrasons (14), en particulier au moins un microphone piézo-sensible (14).

16. Dispositif selon une ou plusieurs des revendications 13 à 15, **caractérisé en ce qu'**un second système de mesure, de préférence en U, comportant une source de génération d'ultrasons et une unité de réception d'un détecteur à ultrasons est prévu avant un dispositif d'application de colle pour la bande de gainage, par rapport à la direction de transport de la bande de gainage.

17. Dispositif selon une ou plusieurs des revendications 13 à 16, **caractérisé en ce qu'**un dispositif d'évaluation (20) est prévu pour l'analyse des signaux ultrasonores reçus.

18. Dispositif selon une ou plusieurs des revendications 13 à 17, **caractérisé en ce que** toute la largeur de la bande de gainage (15) peut être contrôlée par le système de mesure à ultrasons (10).

19. Dispositif selon l'une des revendications 13 à 18, **caractérisé en ce que** pour contrôler un tracé d'encollage appliqué sur une bande de gainage (15) de l'industrie de transformation du tabac, il est prévu un dispositif détecteur (10) comportant au moins une source de génération d'ultrasons (13) destinée à transmettre les ultrasons au tracé d'encollage et au moins une unité de réception d'un détecteur à ultrasons (14) destinée à recevoir les signaux ultrasonores provenant du tracé d'encollage.

20. Machine de l'industrie de transformation du tabac comprenant un dispositif de détection d'une quantité et/ou d'une masse de colle appliquée sur une bande de gainage (15) de l'industrie de transformation du tabac selon une ou plusieurs des revendications 13 à 19.

21. Utilisation d'un système de mesure (10) pour la détection d'une quantité et/ou d'une masse de colle appliquée sur une bande de gainage (15) de l'industrie de transformation du tabac, **caractérisée en ce que** le système de mesure (10) est conçu sous la forme d'un système de mesure à ultrasons (10), ledit système de mesure à ultrasons (10) comprenant au moins une source de génération d'ultrasons (13) destinée à transmettre les ultrasons à la bande de gainage (15) et au moins une unité de réception d'un détecteur à ultrasons (14) destinée à recevoir les signaux ultrasonores provenant de la bande de gainage (15), la bande de gainage (15) étant ce faisant guidée entre la source de génération d'ultrasons (13) et l'unité de réception du détecteur à ultrasons (14).

22. Utilisation selon la revendication 21, **caractérisée en ce qu'**un système de mesure à ultrasons de référence est prévu, de préférence pour la bande de gainage non encollée.

23. Utilisation selon la revendication 21 ou 22, **caractérisée en ce qu'**une unité d'évaluation (20) est prévue pour analyser les signaux ultrasonores reçus.
